# EUROPÄISCHE PATENTANMELDUNG

(11) **EP 0 820 841 A1**
(43) Veröffentlichungstag der Anmeldung: **28.01.1998**
(21) Anmeldenummer: 97110777.6
(22) Anmeldetag: 01.07.1997
(51) Int. Cl.: B26D 7/08, B26F 1/38

(54) **Vorrichtung zum Räumlichen schneiden von Dünnwandigen formteilen**

(30) Priorität: 25.07.1996 DE 19630096
(71) Anmelder: Georg Geiss Maschinenfabrik, 96145 Sesslach (DE)
(72) Erfinder: Geiss, Manfred, Dipl.-Ing. Maschinenbau, 96145 Sesslach (DE)
(74) Vertreter: Reinhard - Skuhra - Weise & Partner

(57) **Zusammenfassung**

Eine Vorrichtung zum räumlichen Schneiden von dünnwandigen Formteilen besteht aus einer Bearbeitungseinheit 14 mit einem Ultraschallwandler 15, einer Sonotrode 17 und einer an der Sonotrode 17 befestigbaren Klinge 18, die um ihre Längsachse A gesteuert drehbar ist, und aus einem Werkzeugmaschinenführungssystem, das eine Aufnahme (10) zur gesteuerten Bewegung der Bearbeitungseinheit 14 in wenigstens zwei Achsen und zur gesteuerten Drehung der Klinge 18 um deren Längsachse A aufweist. Zur Realisierung des räumlichen Schneidens ist dabei als Werkzeugmaschinenführungssystem ein 5-Achsen-Werkzeugmaschinenführungssystem vorgesehen, wobei die Bearbeitungseinheit 14 in der Aufnahme 10 um eine senkrecht zur Drehachse C der Aufnahme 10 orientierte Drehachse B gesteuert schwenkbar gelagert ist.

## Beschreibung

Die Erfindung betrifft eine Vorrichtung zum räumlichen Schneiden von dünnwandigen Formteilen gemäß dem Oberbegriff des Patentanspruchs 1.

Für das Schneiden von Papierflächen, Folien etc. mit beliebigen Konturen ist es bereits bekannt, sogenannte Flachbettschneideanlagen zu verwenden, die ein Messer mit einem Ultraschall-Sonotrode-System verwenden, um einen schnelleren Schnitt mit weniger Kraftaufwand durchzuführen. Dabei ist es aus dem deutschen Gebrauchsmuster DE 295 07 068 U1 bekannt, zum Beschneiden von Dekormaterial an den Rändern von Verkleidungsteilen, z.B. Automobilinnenverkleidungsteilen, eine schneidenförmig ausgebildete Ultraschall-Sonotrode durch das ausgespannt liegende Dekormaterial mit einer ebenen Bahnsteuerung frei zu führen. Bei einer schneidenden Verarbeitung von dünnwandigen Formteilen, insbesondere aus Kunststoff, besteht jedoch ein Bedürfnis nach Vornahme von 3-dimensional orientierten Schnittführungen mit einem Messer das für eine schnellere und leichtere Schnittführung mittels Ultraschall in Schwingung versetzt wird.

In der DE 34 37 908 A1 sind weiterhin ein Verfahren und eine Vorrichtung zum Schneiden von Flachmaterial mittels Ultraschall mit den Merkmalen des Oberbegriffs des Patentanspruchs 1 bekannt, wobei eine automatisch gesteuerte Schneidemaschine mit einem sich hin- und herbewegenden Schneidmesser vorgesehen ist, welches entlang einer Schneidbahn durch eine Auflage aus schlaffem Flachmaterial hindurch unter Computersteuerung führbar ist. Diese vorbekannte Vorrichtung vermag jedoch nur Flachbahnen in einer x-y-Ebene unter vertikaler Hin- und Herbewegung des Schneidmessers und Drehung desselben zu schneiden. Ein räumliches Schneiden läßt sich auch mit dieser Vorrichtung nicht verwirklichen, so daß hier ein Verbesserungsbedarf besteht.

Erfindungsgemäß wird dieses Ziel durch die im Kennzeichen des Patentanspruchs 1 genannten Merkmale gelöst. Bevorzugte Merkmale, die die Erfindung vorteilhaft weiterbilden, sind den nachgeordneten Patentansprüchen zu entnehmen.

Gemäß der Erfindung wird vorteilhaft ein 6-Achsen-Schneidkopf geschaffen, der allen räumlichen Schneidbedingungen sicher und zuverlässig genügt. Dabei geht die Erfindung von einem an sich bekannten 5-Achsen-Werkzeugmaschinenführungssystem aus, bei dem die für eine Frässpindel vorgesehene Aufnahme mit einer Bearbeitungseinheit bestückt wird, die um die vorhandene Querpositionierachse drehbar gelagert ist. Die Bearbeitungseinheit besitzt einen Schallwandler, eine Sonotrode und eine an der Sonotrode auswechselbar befestigte Klinge sowie einen steuerbaren Drehantrieb für die Drehung der Klinge um ihre Längsachse, welche damit die vorhandenen fünf Positionierachsen um eine sechste Achse ergänzt. Hierdurch ist das Messer mit seiner Bewegungsansteuerung beliebig drehbar im Raum führbar.

Gemäß einer bevorzugten weiteren Ausgestaltung der Erfindung ist es vorteilhaft, wenn ein Teil des Schallwandlers mit der Sonotrode und der Klingenbefestigung als Drehwelle ausgebildet ist, die um die Klingenlängsachse drehbar in einem halterförmigen Gehäuse angeordnet sind. Hierdurch läßt sich der vorhandene Aufnahmeraum wirkungsvoll zur Integration der Bearbeitungseinheit aufgrund einer außerordentlich kompakten Gestaltungsmöglichkeit mitverwenden.

Für die Anordnung der Bearbeitungseinheit in der vorhandenen Aufnahme ist es weiterhin günstig, wenn die Bearbeitungseinheit von gegenüberliegenden Gehäuseabschnitten begrenzt ist, an deren Außenseiten Lagerzapfen mit einem Antriebsrad für die Querpositionierung um die Querpositionierachse befestigt sind.

Gemäß einer bevorzugten Ausgestaltung der Erfindung weist der steuerbare Klingendrehantrieb einen mit der Klinge bzw. der Klingendrehwelle (Sonotrode) verbundenen Encoder auf, der elektrisch mit einem Antriebsmotor für die Klingendrehnung verbunden ist, um die Drehstellung der Klinge exakt kontrollieren zu können.

Der steuerbare Drehantrieb besitzt einen Antriebsmotor, der entsprechend der räumlichen Schneidbahn mit dem 5-Achsen-Führungssystem koordiniert nach Art eines Stellantriebs arbeitet. Der Antriebsmotor kann mit integriertem Getriebe und integrierter Klingendrehwelle als eine innerhalb der Aufnahme sitzende Bearbeitungseinheit konzipiert sein. Gemäß der zuerst ausgeführten Ausgestaltung der Erfindung ist der Antriebsmotor jedoch außerhalb der Aufnahme angeordnet und weist eine parallel zur Klingendrehachse verlaufende Motordrehwelle auf, die mit der Klingendrehwelle über einen Zahnriemen verbunden ist.

Von Bedeutung für eine gleichbleibende Schnittleistung und Qualität ohne Verschleißeinflüsse seitens der Klinge ist es weiterhin, wenn die Klinge auswechselbar an der Sonotrode befestigt ist.

Nachfolgend wird die Erfindung unter Bezugnahme auf die beigefügten Zeichnungen näher erläutert. Es zeigen:

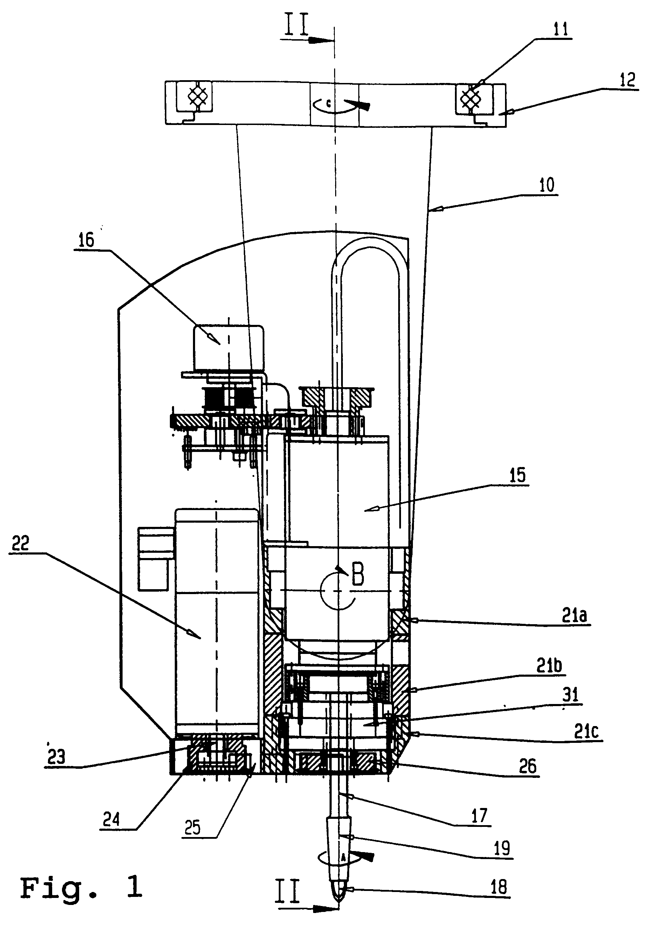

- Fig. 1: eine Seitenansicht auf einen Abschnitt eines 5-Achsen-Werkzeugmaschinenführungssystems mit einem Ausführungsbeispiel einer zusätzlichen Schneidbearbeitungseinheit;
- Fig. 2: einen Längsschnitt entlang der Schnittlinie II - II in Figur 1.

In den Figuren ist von einem 5-Achsen-Führungssystem einer Werkzeugmaschine zur Vereinfachung nur eine Längspositionierachse C dargestellt, die die Drehbarkeit einer Aufnahme 10 um deren Längsachse andeutet. Die Aufnahme 10 ist über Lager 11 an einem Abschnitt 12 drehbar gelagert, der Teil des sonst nicht weiter dargestellten Führungssystems ist.

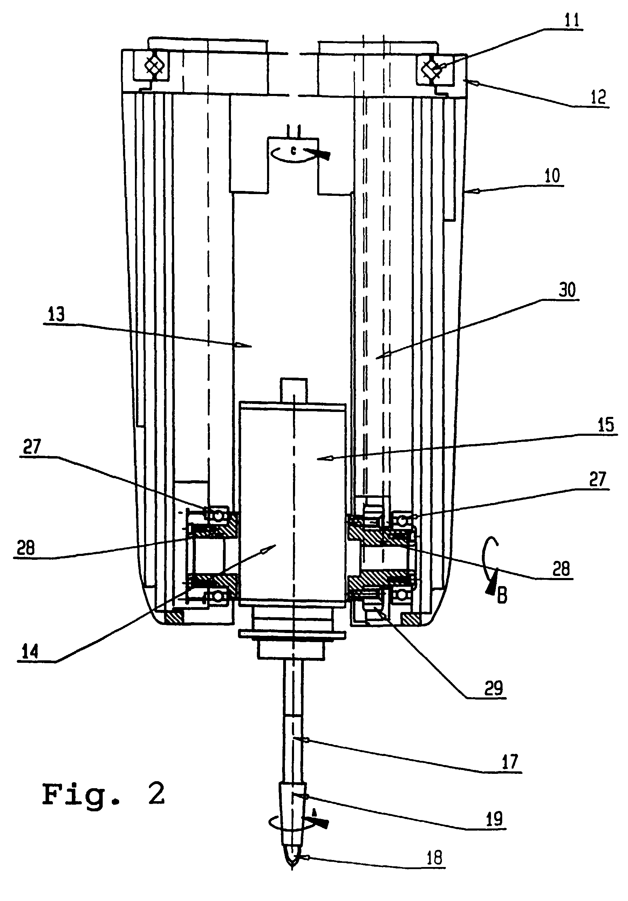

Die Aufnahme 10 besitzt ein längliches Gehäuse mit einem in Figur 2 erkennbaren Gabelkopf-Innenbereich 13, der bei einem herkömmlichen 5-Achsen-Führungssystem einer Werkzeugmaschine zur Aufnahme einer Frässpindel dient. Im Bereich des unteren Endes des Aufnahmebereichs 13 ist in der Aufnahme 10 eine senkrecht zu der Längspositionierachse C orientierte Querpositionierachse B angeordnet, wobei aus dem gabelförmigen Innenbereich 13 eine Bearbeitungseinheit 14 verschwenkbar ist, die nach unten aus dem Innenbereich 13 hervorragt.

Die Bearbeitungseinheit 14 besitzt eine Anordnung aus einem Schallwandler 15 mit einem zugeordneten darüber befindlichen Encoder 16 sowie einer Sonotrode 17 und einer auswechselbaren Klinge 18, die am unteren Ende der Sonotrode 17 in einer nur schematisch angedeuteten Befestigungseinrichtung 19 angebracht ist. Ein zentrischer Teil des Schallwandlers 15, die Sonotrode 17 sowie die Klingenbefestigung 19 bilden eine Klingendrehwelle, die bei 20 in einem halterförmigen Gehäuse 21 gelagert sind.

Das Gehäuse 21 besteht aus drei Teilen 21a, 21b und 21c, die miteinander verschraubt sind. Im wesentlichen außerhalb des Innenbereichs 13 ist ein Antriebsmotor 22 ebenfalls an dem Gehäuse 21 befestigt, wobei die Motordrehachse X parallel zu der Klingendrehwellenachse A verläuft. Die Motordrehwelle 23 besitzt ein darauf angeordnetes Ritzel 24, das über einen Zahnriemen 25 mit dem Zahnriemenrad 26 verbunden ist, welches an der Eingangswelle eines Hohlwellengetriebes 31 befestigt ist. An der Abtriebsseite des Getriebes ist die Klingendrehwellenachse befestigt.

An der Außenseite des seitlichen Gehäuseabschnittes 21a sind Lagerzapfen 28 vorgesehen, die drehbar über Wälzlageranordnungen 27 an der Aufnahme 10 gelagert sind. Mit 29 ist ein Antriebskettenrad angedeutet, das, wie aus Figur 2 ersichtlich, mit dem Führungszapfen 28 verbunden ist und über eine gestrichelte angedeutete Zahnkette 30 aus einem oberhalb der Aufnahme 10 liegenden Bereich zum Verschwenken der Bearbeitungseinheit 14 um die Querpositionierachse B dient.

Angesteuert werden der Drehantrieb für die Klinge 18 sowie der Schwenkantrieb um die Querpositionierachse B und die Bewegung um die übrigen vier Achsen über ein Steuerprogramm, das den räumlichen Bahnverlauf der Schnittführung festlegt. (CNC-Bahnsteuerung)

## Patentansprüche

1. Vorrichtung zum räumlichen Schneiden von dünnwandigen Formteilen, bestehend aus
einer Bearbeitungseinheit (14) mit einem Ultraschallwandler (15), einer Sonotrode (17) und einer an der Sonotrode (17) befestigbaren Klinge (18), die um ihre Längsachse (A) gesteuert drehbar ist, und aus
einem Werkzeugmaschinenführungssystem, das eine Aufnahme (10) zur gesteuerten Bewegung der Bearbeitungseinheit (14) in wenigstens zwei Achsen und zur gesteuerten Drehung der Klinge (18) um deren Längsachse (A) aufweist,
dadurch gekennzeichnet,
daß als Werkzeugmaschinenführungssystem ein 5-Achsen-Werkzeugmaschinenführungssystem vorgesehen ist, wobei die Bearbeitungseinheit (14) in der Aufnahme (10) um eine senkrecht zur Drehachse (C) der Aufnahme (10) orientierte Drehachse (B) gesteuert schwenkbar gelagert ist.

2. Vorrichtung nach Anspruch 1,
dadurch gekennzeichnet,
daß zusätzlich zu den steuerbaren Drehantrieben, die jeweils der Drehachse (C) der Aufnahme (10) und der Drehachse (B) für die Bearbeitungseinheit (14) zugeordnet sind, ein steuerbarer Drehantrieb (22-26) für die Klinge vorgesehen ist.

3. Vorrichtung nach Anspruch 1 oder 2,
dadurch gekennzeichnet,
daß ein Teil des Ultraschallwandlers (15) mit der Sonotrode (17) und einer Klingenbefestigung (19) als Drehwelle ausgebildet ist, die um die Klingenlängsachse (A) drehbar in einem halterförmigen Gehäuse (21) angeordnet ist.

4. Vorrichtung nach einem der vorangehenden Ansprüche,
dadurch gekennzeichnet,
daß die Bearbeitungseinheit (14) von gegenüberliegenden Gehäuseabschnitten (21a, 21b) begrenzt ist, an deren Außenseiten Lagerzapfen (28) mit einem Antriebsrad (29) für die Querpositionierachse (B) befestigt sind.

5. Vorrichtung nach Anspruch 3 oder 4,
dadurch gekennzeichnet,
daß der steuerbare Drehantrieb einen mit der Klingenwelle verbundenen Encoder (16) aufweist, der elektrisch mit einem Antriebsmotor (22) für die Drehung der Klinge (18) verbunden ist.

6. Vorrichtung nach einem der vorangehenden Ansprüche,
dadurch gekennzeichnet,
daß der steuerbare Drehantrieb einen überwiegend außerhalb der Aufnahme (10, 13) angeordneten Antriebsmotor (22) aufweist.

7. Vorrichtung nach Anspruch 6,
dadurch gekennzeichnet,
daß der Antriebsmotor (22) eine parallel zur Klingenlängsachse (A) verlaufende Drehwelle (23) aufweist.

8. Vorrichtung nach einem der Ansprüche 5 - 7,
dadurch gekennzeichnet,
daß der Antriebsmotor (22) mit der Klingendrehwelle über einen Zahnriemen (25) verbunden ist.

9. Vorrichtung nach einem der vorangehenden Ansprüche,
dadurch gekennzeichnet,
daß die Klinge (18) auswechselbar an der Sonotrode (17) befestigt ist.
